# EUROPEAN PATENT APPLICATION

(11) **EP 4 734 308 A1**
(43) Date of publication of application: **29.04.2026**
(21) Application number: 23951313.8
(22) Date of filing: 03.11.2023
(51) Int. Cl.: H02H 3/08, H01H 85/02

(54) **DRIVING CIRCUIT AND ELECTRIC DEVICE**

(30) Priority: 04.09.2023 CN 202322393198 U
(71) Applicant: Contemporary Amperex Technology Co., Limited, Ningde, Fujian 352100 (CN)
(72) Inventor: WU, Kai, Ningde, Fujian 352100 (CN); XIA, Zhangle, Ningde, Fujian 352100 (CN); LI, Weiqiang, Ningde, Fujian 352100 (CN); WU, Minhao, Ningde, Fujian 352100 (CN)
(74) Representative: Lorenz Seidler Gossel Part. mbB
(86) International application number: PCT/CN2023/129656
(87) International publication number: WO 2025/050498

(57) **Abstract**

A drive circuit (10) and an electrical apparatus (100) are disclosed. The drive circuit (10) includes a driving module (11) which is connected to a driving end of an active fuse (20) and configured to provide a constant current and a constant voltage. The active fuse (20) blows under the driving of the constant current, and is conducted under the driving of the constant voltage. The problems in related technologies of switching devices (Q2, Q3) being prone to burning out or erroneous detection of the status of the active fuse (20) can be solved.

## Description

### CROSS-REFERENCE TO RELATED APPLICATIONS

The present application claims priority to Chinese Patent Application 202322393198.1, entitled "DRIVE CIRCUIT AND ELECTRICAL APPARATUS" filed on September 4, 2023, the entire content of which is incorporated by reference in the present application.

### TECHNICAL FIELD

The present application relates to the technical field of active fuse control, and particularly relates to a drive circuit and an electrical apparatus.

### BACKGROUND

With the development of new energy technology, new energy vehicles are gradually being commercialized in the market, and electric vehicles are the backbone of new energy vehicles and have been vigorously promoted and applied in the market.

In the electric vehicles, active fuses are usually installed in high-voltage loops, and can be connected to drive sources by switching device. In the case of collision of electrical apparatuses, the switching devices can be controlled to turn on, and the drive voltage provided by the drive sources can be configured to blow the active fuses.

However, there are problems in related technologies of the switching devices being prone to burning out or erroneous detection of the status of the active fuse.

### SUMMARY OF THE INVENTION

The present application provides a drive circuit and an electrical apparatus, aiming to solve problems in related technologies of switching devices being prone to burning out or erroneous detection of the status of the active fuse.

In a first aspect, the present application provides a drive circuit, which includes a driving module; the driving module is connected to a driving end of an active fuse and is configured to provide a constant current and a constant voltage, the constant current is configured to blow the active fuse, and the constant voltage is configured to drive the active fuse to be conducted.

According to the drive circuit provided by the embodiment of the present application, the driving module can be configured to provide the constant current and the constant voltage, so that the driving module can be configured to provide the constant current to blow the active fuse under the condition that it is needed to blow the active fuse; because the current is constant, the switching device connected to the driving end of the active fuse can be prevented from being burnt out due to overlarge current; under the condition that it is needed to detect the status of the active fuse, the driving module can be configured to provide the constant voltage to drive the active fuse; and because the voltage is constant, a signal acquired during status detection is relatively accurate, thereby improving the accuracy of status detection of the active fuse.

In a possible embodiment in the first aspect, the driving module includes a first driving sub-module and a second driving sub-module, and the active fuse circuit further includes a first switching module;
the first driving sub-module is connected to the driving end of the active fuse and is configured to provide the constant voltage; and
the second driving sub-module is connected to the first driving sub-module by the first switching module, is connected to the driving end of the active fuse, and is configured to provide the constant current according to the constant voltage under the condition that the first switching module is conducted.

In a possible embodiment in the first aspect, the drive circuit further includes: a current limiting module which is configured to transmit the constant voltage provided by the driving module to the driving end of the active fuse.

In a possible embodiment in the first aspect, the drive circuit further includes: a control module which is connected to the first switching module and configured to control on/off of the first switching module.

In a possible embodiment in the first aspect, the control module is further connected to a first driving end and a second driving end of the active fuse, and the control module is further configured to acquire a first voltage of the first driving end and a second voltage of the second driving end under the condition that the first switching module is turned off, and determine the status of the active fuse according to the first voltage and the second voltage.

In the possible embodiment in the first aspect, a current limiting module is connected between the first driving sub-module and the first driving end of the active fuse; the control module is configured to determine a current flowing through the active fuse according to the voltage value of the constant voltage, the first voltage, and a resistance value of the current limiting module; determine a resistance value of an active fuse loop according to the first voltage, the second voltage, and the current flowing through the active fuse; and determine the status of the active fuse according to the resistance value of the active fuse loop.

In a possible embodiment in the first aspect, the drive circuit further includes: a one-way conduction module which is connected between the driving module and a power supply.

In a possible embodiment in the first aspect, the first switching module includes a first switch; a first end of the first switch is connected to an output end of the first driving sub-module; a second end of the first switch is connected to an input end of the second driving sub-module; and a control end of the first switch is connected to the control module.

In a possible embodiment in the first aspect, the first driving sub-module includes a first inductor, a first diode, a first capacitor and a fourth switch;
a first end of the first inductor is connected to the power supply, and a second end of the first inductor is connected to the first end of the first switch and a positive electrode of the first diode;
a second end of the fourth switch is grounded, and a first control signal is applied to a control end of the fourth switch;
a negative electrode of the first diode is connected to a first electrode of the first capacitor; and
the first electrode of the first capacitor is connected to the driving end of the active fuse, and a second electrode of the first capacitor is grounded.

In a possible embodiment in the first aspect, the second driving sub-module includes a driving control sub-module, a fifth switch, a second inductor, a second capacitor and a sampling resistor;
an input end of the driving control sub-module is connected to an output end of the first driving sub-module by the first switching module;
a first end of the second inductor is connected to a first control end of the driving control sub-module and a first end of the fifth switch, and a second end of the second inductor is connected to a first electrode of the second capacitor and a first end of the sampling resistor;
a second end of the fifth switch is grounded, and a second control signal is applied to a control end of the fifth switch;
a second electrode of the second capacitor is grounded; and
a first end of the sampling resistor is connected to a first feedback signal end of the driving control sub-module, and a second end of the sampling resistor is connected to a second feedback signal end of the driving control sub-module and the driving end of the active fuse.

In a possible embodiment in the first aspect, the current limiting module includes a first resistor.

In a possible embodiment in the first aspect, the one-way conduction module includes a second diode, a positive electrode of the second diode is connected to the power supply, and a negative electrode of the second diode is connected to the input end of the driving module.

Based on the same invention idea, in a second aspect, the embodiment of the present application provides an electrical apparatus including an active fuse and the drive circuit as described in any embodiment in the first aspect.

The above description is only an overview of the technical solution of the present application, and in order to be able to understand more clearly the technical means of the present application, it can be implemented in accordance with the contents of the description, and in order to make the above and other purposes, characteristics and advantages of the present application more obvious and easy to understand, the specific embodiments of the present application are listed below.

### DESCRIPTION OF DRAWINGS

The features, advantages and technical effects of the exemplary embodiments of the present application will be described with reference to the accompanying drawings.
FIG. 1 is a schematic structural diagram of a drive circuit according to an embodiment of the present application;
FIG. 2 is a schematic structural diagram of a drive circuit according to another embodiment of the present application;
FIG. 3 is a schematic structural diagram of a drive circuit according to yet another embodiment of the present application;
FIG. 4 is a schematic structural diagram of a drive circuit according to yet another embodiment of the present application;
FIG. 5 is a schematic structural diagram of a drive circuit according to yet another embodiment of the present application;
FIG. 6 is a schematic structural diagram of a drive circuit according to yet another embodiment of the present application;
FIG. 7 is a schematic structural diagram of a drive circuit according to yet another embodiment of the present application;
FIG. 8 is a schematic structural diagram of a drive circuit according to yet another embodiment of the present application;
FIG. 9 is a schematic structural diagram of a drive circuit according to yet another embodiment of the present application;
FIG. 10 is a schematic structural diagram of a drive circuit according to yet another embodiment of the present application;
FIG. 11 is a schematic structural diagram of a module of an electrical apparatus according to an embodiment of the present application.

The accompanying drawings may not be drawn in accordance with the actual scale.

In the accompanying drawings:
10, drive circuit;
11, driving module; 111, first driving sub-module; 112, second driving sub-module; 1121, driving control sub-module;
12, first switching module;
13, current limiting module;
14, control module;
15, one-way conduction module;
100, electrical apparatus.

### DETAILED DESCRIPTION

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are some, rather than all, of the embodiments of the present application. Based on the embodiments in the present application, all other embodiments obtained by ordinary technicians in this field without creative work belong to the protection scope of the present application.

Unless otherwise defined, all technical and scientific terms used in the present application have the same meanings as generally understood by those skilled in the technical art of the present application; the terms used in the description of the present application are for the purpose of describing specific embodiments only and are not intended to limit the present application; the terms "include" and "have" in the description and claims of the present application and in the description of the above accompanying drawings and any variation thereof are intended to cover the non-exclusive inclusion. In the specification, claims, and the abovementioned accompanying drawings of the present application, the terms "first", "second", and so on are intended to distinguish between similar objects rather than indicating a specific order.

In the description of the present disclosure, it is to be noted that unless otherwise specified and limited, the terms "arranging", "linking", "connection", and "attaching" are to be broadly understood, for example, the connection can be fixed connection, detachable connection, or integrated connection; and the linking can be mechanical connection; the linking can be direct linking, or indirect linking through an intermediate medium, or internal communication of two components. For those of ordinary skill in the art, the specific meaning of the above terms in the present application may be understood on a case-by-case basis.

As described in the Background, there are problems in related technologies of the switching devices being prone to burning out or erroneous detection of the status of the active fuse.

The inventor has studied and analyzed the causes of the above technical problems, specifically, as follows:
because the impedance of the active fuse is low, at the moment when the switching device connected to the active fuse is closed, the current flowing through it is very large, which may cause the switching device to be burned out, resulting in the problem of unable to drive the active fuse to blow.

Due to the instability of the drive source connected to the switching device, the voltage outputted by the drive source varies, and even has a large fluctuation range, for example, if the driver source is a KL30 power supply, the output voltage of the KL30 power supply may change from 12 V to 18 V, 24 V, etc., resulting in a greater risk of inaccurate status detection of the active fuse, so there is the problem of false detection.

In order to solve the above technical problems, the embodiments of the present application provide a drive circuit and an electrical apparatus, and the drive circuit and the electrical apparatus provided by the embodiment of the present application are introduced in detail below in cooperation with the accompanying drawings.

The following first introduces the drive circuit provided by the embodiments of the present application.

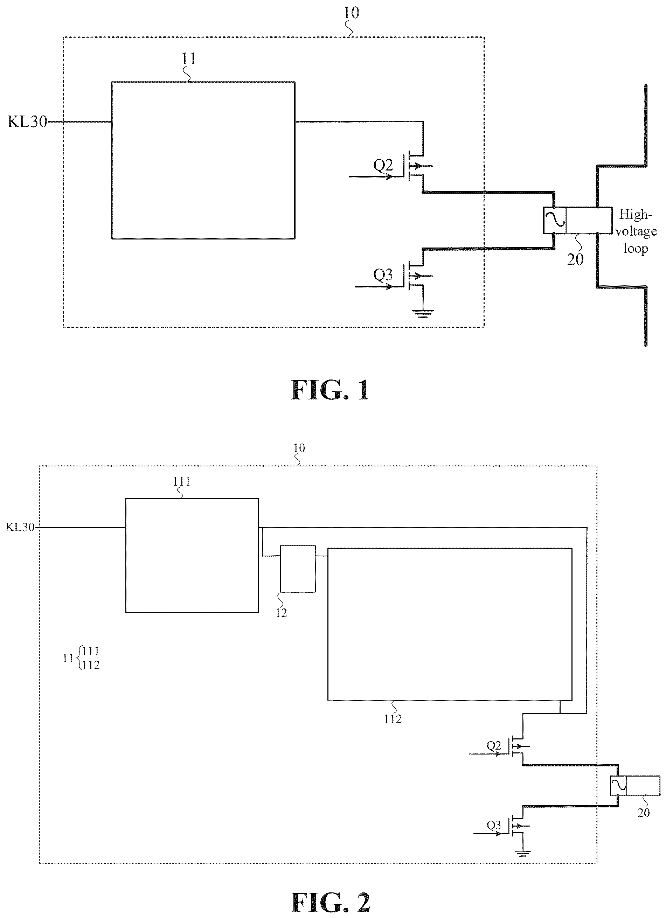

FIG. 1 is a schematic structural diagram of a drive circuit according to an embodiment of the present application. As shown in FIG. 1, the drive circuit 10 can include a driving module 11.

The driving module 11 is connected to a driving end of an active fuse 20, the driving module 11 can be configured to provide at least one of a constant current and a constant voltage, the constant current can be configured to blow the active fuse 20, and the constant voltage can be configured to drive the active fuse 20 to be conducted.

FIG. 1 shows a condition that the active fuse 20 is connected in series with a positive electrode and a negative electrode of a high-voltage loop. In other examples, the active fuse 20 can also be connected in series between battery units in a battery pack, and when the active fuse 20 is blown, a self-short-circuit phenomenon in the battery pack can be avoided.

In some embodiments of the present application, the active fuse can be a fuse which uses gunpowder as a power source of a blowing mechanical structure and can be actively blown by applying a driving voltage or a driving current to two driving ends of the active fuse to form a relatively large input current at the driving ends of the active fuse so as to trigger gunpowder to explode. However, the actual structure of the active fuse 20 is not limited in the embodiments, and all fuses which can be triggered to be blown by a relatively large input current in the related technology can be used in the embodiments.

The active fuse 20 can be blown within a certain blown current range. In the embodiments of the present application, the active fuse 20 can be blown under the driving of the constant current provided by the driving module 11, and is conducted under the driving of the constant voltage provided by the driving module 11. It is to be understood that the constant current provided by the driving module 11 is within the blowing current range, and when the constant voltage provided by the driving module 11 drives the active fuse 20, the current in the active fuse 20 is smaller than the minimum current within the blowing current range.

For example, the blowing current range of the active fuse 20 is [1.2A, 1.75A ], the constant current provided by the driving module 11 can be between [1.2A, 1.75A ], and when the constant voltage provided by the driving module 11 drives the active fuse 20, the current in the active fuse 20 can be less than 1.2 A. For example, when the constant voltage provided by the driving module 11 drives the active fuse 20, the current in the active fuse 20 can be less than or equal to 100 mA.

Exemplarily, at least one driving end of the active fuse 20 can be connected to the switching device, and when the switching device is turned on, the constant current or the constant voltage provided by the driving module 11 can be transmitted to the active fuse 20.

As an example, in FIG. 1, a first driving end of the active fuse 20 is connected to a second switching device Q2, a second driving end of the active fuse 20 is connected to a third switching device Q3, and the driving module 11 is connected to the first driving end of the active fuse 20 by the second switching device Q2. The second driving end of the active fuse 20 is grounded by the third switching device Q3. Control ends of the second switching device Q2 and the third switching device Q3 can be connected to a control module (not shown in FIG. 1).

It is to be noted that there are two switching devices Q2 and Q3 in the embodiments, and in other examples, there can be only one switching device, for example, there can be only the second switching device Q2, or only the third switching device Q3. The number of the switching devices is not limited in the embodiments, as long as it can control the on/off between the driving module 11, the active fuse 20 and the ground.

It is to be understood that it is needed to blow the active fuse in case of emergencies, such as vehicle collisions, so it is particularly important to diagnose the status of the active fuse.

According to the drive circuit 10 provided by the embodiment of the present application, the driving module 11 can be configured to provide at least one of the constant current and the constant voltage, so that the driving module 11 can be configured to provide the constant current to blow the active fuse 20 under the condition that it is needed to blow the active fuse; because the current is constant, the switching device connected to the driving end of the active fuse 20 can be prevented from being burnt out due to overlarge current; under the condition that it is needed to detect the status of the active fuse, the driving module 11 can be configured to provide the constant voltage to drive the active fuse 20; and because the voltage is constant, a signal acquired during status detection is relatively accurate, thereby improving the accuracy of status detection of the active fuse.

It is to be noted that the driving module 11 can be configured to provide at least one of the constant current and the constant voltage, namely, the driving module 11 can be configured to provide the constant current, the constant voltage, or both the constant current and the constant voltage.

The following is a specific description of the implementation details of the drive circuit in this embodiment, and the following content is only for the convenience of understanding and provided implementation details, and is not necessary for the implementation of this solution.

In some optional embodiments, as shown in FIG. 2, the driving module 11 includes a first driving sub-module 111 and a second driving sub-module 112; the drive circuit 10 can also include a first switching module 12.

The first driving sub-module 111 is connected to the driving end of the active fuse 20 and is configured to provide the constant voltage. The second driving sub-module 112 is connected to an output end of the first driving sub-module 111 by the first switching module 12 and is configured to provide the constant current according to the constant voltage under the condition that the first switching module 12 is conducted.

In case of emergencies, such as vehicle collision, it is needed to blow the active fuse. In most cases, it is needed to detect the status of the active fuse. For example, during the driving of the vehicle, it is needed to detect the status of the active fuse constantly.

In the embodiment of the present application, under the condition that the first switching module 12 is conducted, the second driving sub-module 112 is configured to provide a constant current according to the constant voltage provided by the first driving sub-module 111. That is, the second driving sub-module 112 is in a working status only under the condition that the first switching module 12 is conducted, and the second driving sub-module 112 can be in a non-working status under the condition that the first switching module 12 is turned off. Therefore, under the condition that it is needed to blow the active fuse, the first switching module 12 can be controlled to be conducted to make the second driving sub-module 112 in the working status; and in most cases, the second driving sub-module 112 can be in the non-working status, which is conducive to reducing the power consumption.

It is to be understood that the second driving sub-module 112 is connected to the output end of the first driving sub-module 111 by the first switching module 12, so that the second driving sub-module 112 can generate the constant current by the constant voltage outputted by the first driving sub-module 111; the constant voltage is applied to the second driving sub-module 112, thus the constancy of the output current can be ensured. In addition, an extra power supply is not needed to be charged for the second driving sub-module 112, so the integral circuit structure of the drive circuit is favorably simplified.

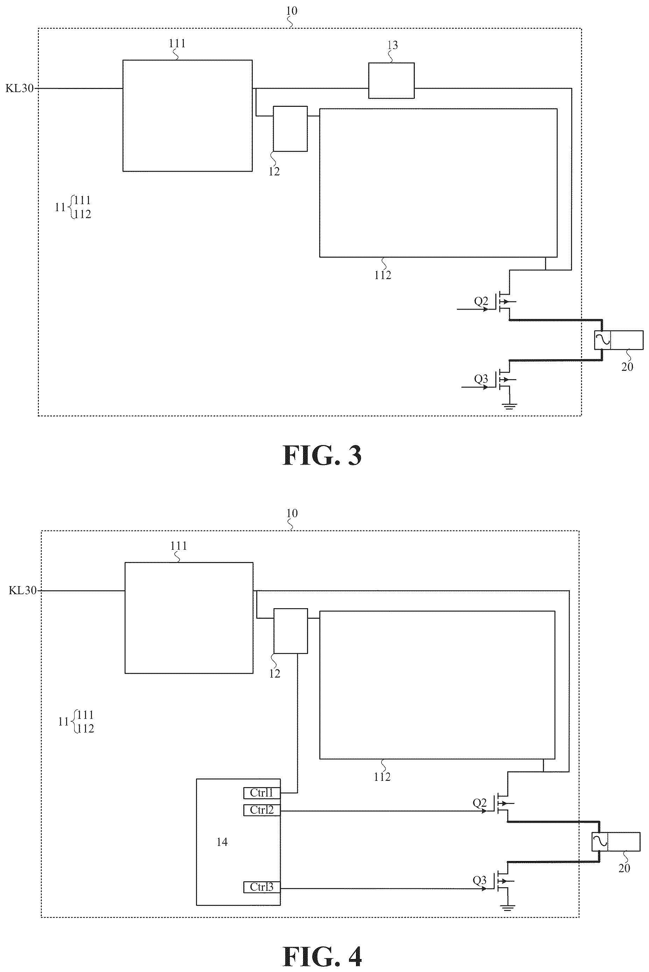

In some optional embodiments, as shown in FIG. 3, the drive circuit 10 also can include a current limiting module 13. The constant voltage provided by the driving module 11 can be transmitted to a driving end of the active fuse 20 by the current limiting module 13. The constant current provided by the driving module 11 is transmitted to a path of the active fuse 20 without passing through the current limiting module 13.

For example, the driving module 11 includes the first driving sub-module 111 for providing the constant voltage, and the current limiting module 13 can be connected between the output end of the first driving sub-module 111 and the driving end of the active fuse 20. The current limiting module 13 does not need to be arranged between the output end of the second driving sub-module 112 and the driving end of the active fuse 20.

The current limiting module 13 can be configured to limit the magnitude of current flowing through the active fuse 20, and the current flowing through the active fuse 20 can be limited to a small current value under the driving of the constant voltage provided by the driving module 11, thereby avoiding blowing the active fuse 20.

In some optional embodiments, as shown in FIG. 4, the drive circuit 10 can further include a control module 14, and the control module 14 is connected to the first switching module 12 and configured to control the on/off of the first switching module 12.

The on/off of the first switching module 12 is configured to control the working status of the second driving sub-module 112; under the condition that the control module 14 controls the first switching module 12 to be conducted, the second driving sub-module 112 is in the working status, and the second driving sub-module 112 generates the constant current and drives the active fuse 20 to be blown. Under the condition that the control module 14 controls the first switching module 12 to be turned off, the second driving sub-module 112 is in the non-working status, and the first driving sub-module 111 generates the constant voltage and drives the active fuse 20.

Exemplarily, the control module 14 can be configured to receive a trigger signal or a monitoring signal, and the trigger signal or the monitoring signal can be a signal for controlling the first switching module 12 to be conducted in an abnormal condition so as to allow the second driving sub-module 112 to generate the constant current and drive the active fuse 20 to be blown. The abnormal condition can include the situation that the electrical apparatus collides and the like.

Exemplarily, the control module 14 can be a chip or circuit that performs relevant actions according to characteristic instructions. For example, the control module 14 can be a Microcontroller Unit (MCU), a Digital Signal Processor (DSP), an Application Specific-Integrated Circuit (ASIC), and a Field-Programmable Gate Array (FPGA) or other programmable logic devices, discrete gates or transistor logic devices, discrete hardware components, etc. For another example, the control module 14 can include an external clock, a Random Access Memory (RAM), a Read-Only Memory (ROM), etc. In the present application, the specific structure of control module 14 is not limited.

Exemplarily, as shown in FIG. 4, the control module 14 can include a first control sub-module Ctrl, the first control sub-module Ctr1 is connected to a control end of the first switching module 12 and is configured to output a signal for controlling on/off of the first switching module 12.

The control module 14 can also include a second control sub-module Ctr2 and a third control sub-module Ctr3. The second control sub-module Ctr2 is connected to a control end of a second switch device Q2 and is configured to output a signal for controlling on/off of the second switch device Q2. The third control sub-module Ctr3 is connected to a control end of a third switch device Q3 and is configured to output a signal for controlling on/off of the third switch device Q3.

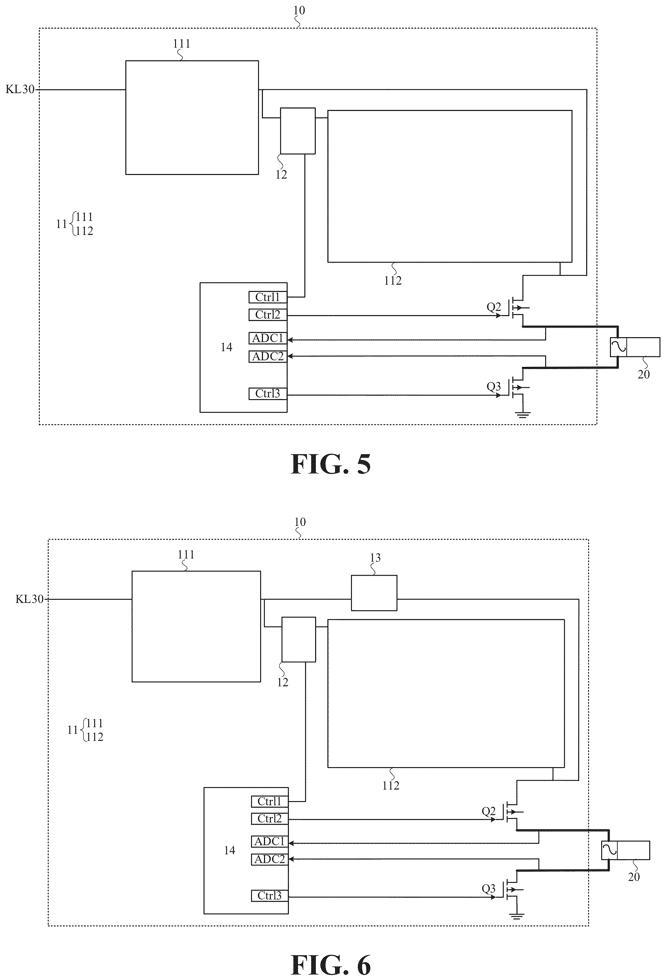

In some optional embodiments, as shown in FIG. 5, the control module 14 is also connected to a first driving end and a second driving end of the active fuse 20, and the control module 14 is also configured to acquire a first voltage V1 of the first driving end and a second voltage V2 of the second driving end under the condition that the first switching module 12 is turned off, and determine the status of the active fuse 20 according to the first voltage V1 and the second voltage V2.

When the first switching module 12 is turned off, the active fuse 20 is driven by the constant voltage provided by the first driving sub-module 111; and because the constant voltage is relatively stable, the acquired first voltage V1 and the acquired second voltage V2 are relatively accurate, thereby improving the accuracy of the status of the active fuse 20.

Exemplarily, under the condition that the first voltage V1 is relatively close to the constant voltage provided by the first driving sub-module 111 and the second voltage V2 is relatively close to a ground voltage, the active fuse 20 can be determined to be in a turnoff status (or called an open-circuit status). When the first voltage V1 is equal to the second voltage V2, the active fuse 20 can be determined to be in a short circuit status. When a difference value between the first voltage V1 and the second voltage V2 is close to a voltage drop caused by a resistance value of a loop of the active fuse 20, the active fuse 20 can be determined to be in a conducted status.

The status determination of the active fuse 20 is only some examples and is not used for limiting the present application.

Exemplarily, the control module 14 can include a first signal acquisition sub-module ADC1 and a second signal acquisition sub-module ADC2. The first signal acquisition sub-module ADC1 is connected to the first driving end of the active fuse 20 and is configured to acquire the first voltage V1 of the first driving end. The second signal acquisition sub-module ADC2 is connected to the second driving end of the active fuse 20 and is configured to acquire the second voltage V2 of the second driving end.

As described in one of the above embodiments, the constant voltage provided by the driving module 11 can be transmitted to the driving ends of the active fuse 20 by the current limiting module 13.

In some optional embodiments, as shown in FIG. 6, the current limiting module 13 is connected between the first driving sub-module 111 and the first driving end of the active fuse 20. The control module 14 can be specifically configured to determine a current I flowing through the active fuse according to a voltage value Vout of the constant voltage, the first voltage V1, and a resistance value R1 of the current limiting module 13, determine a resistance value R of the loop of the active fuse according to the first voltage V1, the second voltage V2, and the current I flowing through the active fuse, and determine the status of the active fuse 20 according to the resistance value R of the loop of the active fuse.

When the active fuse 20 is in different statuses, the loop of the active fuse 20 has different resistance values. The voltage value Vout of constant voltage provided by the first driving sub-module 111, the first voltage V1, the second voltage V2 and the resistance value R1 of the current limiting module 13 are known, the voltage difference between the first driving end and the second driving end of the active fuse 20 is ΔV=V1-V2, the current flowing through the active fuse 20 is the same as the current flowing through the current limiting module 13, and the current is shown as I=(Vout-V1)/R1, so that the resistance value of the loop of the active fuse 20 can be obtained as R=ΔV/I.

For example, under the condition that the resistance value R of the loop of the active fuse 20 is less than a first threshold, the active fuse 20 is considered to be in a short circuit status; when the resistance value R of the loop of the active fuse 20 is greater than a second threshold, the active fuse 20 is considered to be in an open-circuit status; and when the resistance value R of the loop of the active fuse 20 is greater than or equal to the first threshold and less than or equal to the second threshold, the active fuse 20 is considered to be in the conducted status.

Exemplarily, the first threshold is 1.7 Ω, and the second threshold is 10 Ω. Definitely, it is only an example and is not configured to limit the present application. The amplitude of the first threshold and the second threshold can be determined according to the specific structure of the active fuse 20 and the high-voltage loop thereof.

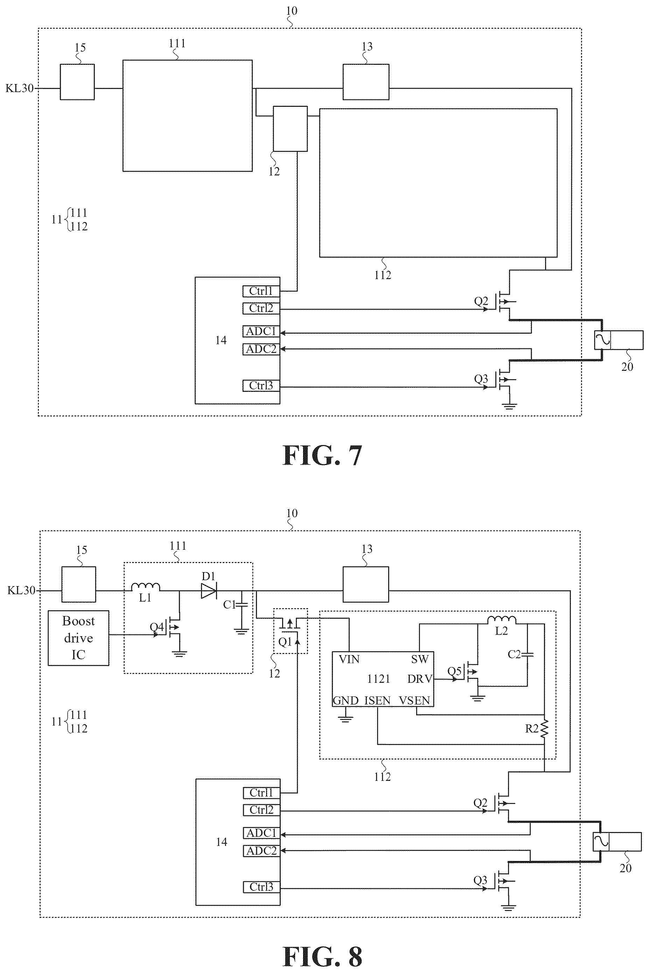

In some optional embodiments, as shown in FIG. 7, the drive circuit 10 can further include a one-way conduction module 15, and the one-way conduction module 15 can be connected between the driving module 11 and the power supply KL30.

It is to be understood that the one-way conduction module has a guiding conducting characteristic, and the one-way conduction module 15 enables an electric signal to flow from the power supply KL30 to the driving module 11. The one-way conduction module 15 can be configured to prevent the electric signal of the driving module 11 from flowing back to the power supply KL30, so that the stability of the power supply KL30 can be improved. The electric signal can include a voltage signal or a current signal.

Exemplarily, under the condition that the drive circuit 10 includes the first driving sub-module 111 and the second driving sub-module 112, the one-way conduction module 15 can be connected between the input end of the first driving sub-module 111 and the power supply KL30.

The power supply KL30 is a low-voltage power supply. For example, the power supply KL30 can be configured to provide a voltage of about 12 V.

In some optional embodiments, as shown in FIG. 8, the first switching module 12 can include a first switch Q1, a first end of the first switch Q1 is connected to an output end of the first driving sub-module 111, a second end of the first switch Q1 is connected to an input end of the second driving sub-module 112, and a control end of the first switch Q1 is connected to the control module 14.

And/or, the first driving sub-module 111 can include a first inductor L1, a first diode D1, a first capacitor C1 and a fourth switch Q4. A first end of the first inductor L1 is connected to the power supply KL30, and a second end of the first inductor L1 is connected to a first end of the fourth switch Q4 and a positive electrode of the first diode D1; a second end of the fourth switch Q4 is grounded, and a first control signal is applied to a control end of the fourth switch Q4; a negative electrode of the first diode D1 is connected to a first electrode of the first capacitor C1; and the first electrode of the first capacitor C1 is connected to the first driving end of the active fuse 20, and a second electrode of the first capacitor C1 is grounded.

And/or, the second driving sub-module 112 includes a driving control sub-module 1121, a fifth switch Q5, a second inductor L2, a second capacitor C2 and a sampling resistor R2; an input end VIN of the driving control sub-module 1121 is connected to the output end of the first driving sub-module 111 by the first switch Q1; a first end of the second inductor L2 is connected to a first control end SW of the driving control sub-module 1121 and a first end of the fifth switch Q5; a second end of the second inductor L2 is connected to a first electrode of the second capacitor C2 and a first end of the sampling resistor R2; a second end of the fifth switch Q5 is grounded, and a second control signal is applied to a control end of the fifth switch Q5; a second electrode of the second capacitor C2 is grounded; the first end of the sampling resistor R2 is connected to a first feedback signal end VSEN of the driving control sub-module 1121, and a second end of the sampling resistor R2 is connected to a second feedback signal end ISEN1 of the driving control sub-module 1121 and the driving end of the active fuse 20.

The first control signal applied to the control end of the fourth switch Q4 can include a Pulse Width Modulation (PWM) signal; for convenient distinguishing, the first control signal connected to the control end of the fourth switch Q4 is recorded as PWM1. The fourth switch Q4 can be controlled to be turned on and turned off alternately; and therefore, a BOOST circuit can be formed by the first inductor L1, the first diode D1, the first capacitor C1 and the fourth switch Q4.

The power supply KL30 is a direct current power supply, the first end of the first inductor L1 is connected to the power supply KL30, direct current is inputted into the first inductor L1, and under the condition that the fourth switch Q4 is turned on, the fourth switch Q4 can be treated as a wire, and the current flows through the first inductor L1 and the fourth switch Q4 and then reaches the ground. The direct current is inputted, so that the current in the first inductor L1 is linearly increased at a certain ratio. Along with the increase of the current in the first inductor L1, the first inductor L1 stores some energy. Therefore, the first inductor L1 is charged under the condition that the fourth switch Q4 is turned on.

Under the condition that the fourth switch Q4 is turned off, the current in the first inductor L1 continues to flow towards the same direction due to the current holding characteristic of the first inductor L1, and the current will flow through the first diode D1 and reaches the first electrode of the first capacitor C1 due to the fact that the first switch tube Q1 is turned off. The current in the first inductor L1 will be changed into gradual decrease during energy release from gradual increase during energy storage; and the voltage polarity on the first inductor L1 will be reversed when the current on the first inductor L1 changes from increase to decrease, and the voltage in the first inductor L1 is superposed with the voltage applied from the power supply KL30, thus completing a boosting function.

Exemplarily, a duty ratio of the PWM1 signal can be adjusted to control a proportional relationship between a turn-on duration and a turn-off duration of the fourth switch Q4, and then a boosting multiple of the voltage applied to the power supply KL30 can be adjusted, namely, the output voltage can be adjusted to be the constant voltage, so that the function of providing the constant voltage by the first driving sub-module 111 is realized. The PWM1 signal has different duty ratios, namely, the refresh frequency of the PWM1 signal can be different.

Exemplarily, a BOOST drive chip can be configured to output the PWM1 signal to control the turn-on or turn-off of the fourth switch Q4, and the specific structure of the BOOST drive chip is not limited in the present application.

The first control end SW in the second driving sub-module 112 can be configured to control the on/off between the second inductor L2 and the input end VIN of the driving control sub-module 1121, and the constant voltage outputted by the first driving sub-module 111 is applied to the input end VIN of the driving control sub-module 1121. The second inductor L2, the fifth switch Q5 and the second capacitor C2 can form a Buck step-down circuit.

Under the condition that the constant current is needed to drive the active fuse 20, the first switch Q1 can be controlled to be turned on, the first control end SW controls the second inductor L2 to be connected to the input end VIN of the driving control sub-module 1121, the fifth switch Q5 can be controlled to be turned off, and the current directly flows to the second inductor L2, charges the second capacitor C2 at the same time, and supplies power to the active fuse 20. Because the current in the second inductor L2 cannot be changed suddenly, the change of the current will be hindered, at this moment, the polarity of the first end of the second inductor L2 is positive, the polarity of the second end of the second inductor L2 is negative, and the current in the second inductor L2 increases slowly. When the voltage outputted by the Buck step-down circuit reaches the preset voltage threshold, the preset voltage threshold is less than the value of the constant voltage provided by the first driving sub-module 111, and the first control end SW can control the second inductor L2 to be disconnected with the input end VIN of the driving control sub-module 1121, and controls the fifth switch Q5 to be turned on, at this moment, the second inductor L2 will sense an opposite voltage in order to hinder the disappearance of the current, thus the positive and negative polarities are changed, the second inductor L2 is a power supply in the Buck step-down circuit at this moment, and supplies power to the active fuse 20 to form the loop through the fifth switch Q5; and when the polarity of the second inductor L2 changes, the second capacitor C2 can supply power to the active fuse 20.

For example, a switch can be connected between the second inductor L2 and the input end VIN of the driving control sub-module 1121, the first control end SW can control the on/off of the switch, and the first control end SW can control the on/off of the switch through the PWM2 signal.

In addition, the second driving sub-module 112 forms feedback regulation by the sampling resistor R2, for example, voltages at two ends of the sampling resistor R2 can be collected, the magnitude of the current outputted by the second driving sub-module 112 is calculated according to the voltages at the two ends of the sampling resistor R2 and the resistance of the sampling resistor R2, if the current outputted by the second driving sub-module 112 decreases or increases, the duty ratio of the PWM2 signal of the first control end SW can be adjusted, so as to control the proportional relationship between the turn-on duration and the turn-off duration between the second inductor L2 and the input end VIN of the driving control sub-module 1121, and then the output current is adjusted to be the constant current, thereby achieving the function that the second driving sub-module 112 provides the constant current. The PWM2 signal has different duty ratio, namely, the PWM2 signal has different the refresh frequency.

Exemplarily, the driving control sub-module 1121 can be a chip or a circuit executing related actions according to characteristic instructions, in which, the chip or the circuit can include an external clock, a Random Access Memory (RAM), a Read-Only Memory (ROM) and the like. The specific structure of the driving control sub-module 1121 is not limited in the present application.

It is to be noted that the specific circuit structures of the first driving sub-module 111 and the second driving sub-module 112 in the above examples are only some examples and are not used for limiting the present application. In other examples, the first driving sub-module 111 and the second driving sub-module 112 can also have other structures, as long as the second driving sub-module 112 can provide the constant current and the first driving sub-module 111 can provide the constant voltage.

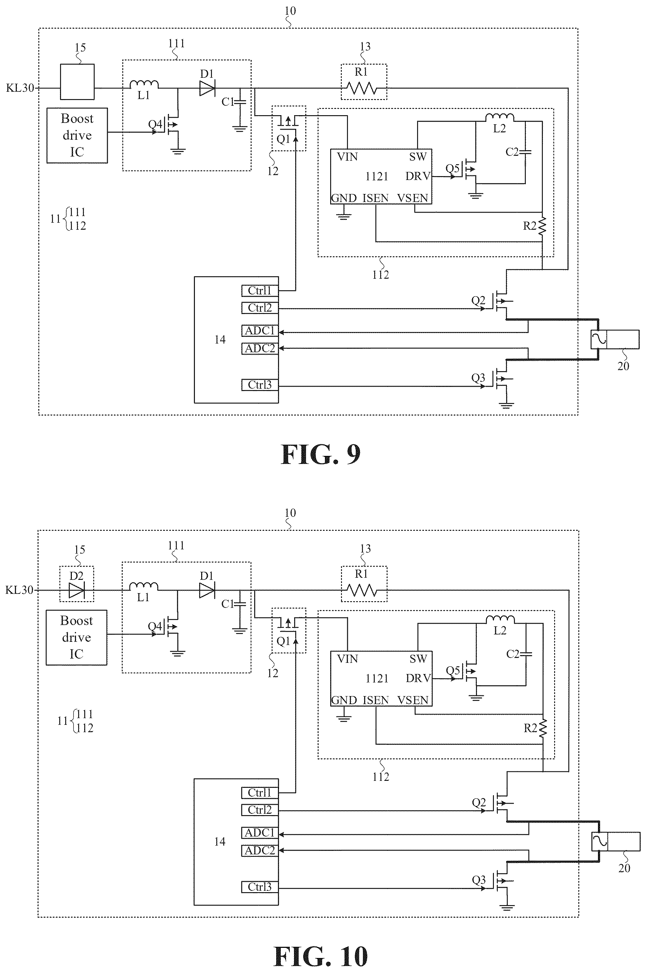

In some optional embodiments, as shown in FIG. 9, the current limiting module 13 can include the first resistor R1. It is to be noted that the resistance value of the first resistor R1 can be set according to the magnitude of constant voltage which can be provided by the driving module 11 and the magnitude of current needing to be limited.

It is to be noted that the alternative solutions based on the current limiting module 13 including the first resistor R1 are all within the protection range of the present application.

In some optional embodiments, as shown in FIG. 10, the one-way conduction module 15 can include a second diode D2, the positive electrode of the second diode D2 is connected to the power supply KL30, and the negative electrode of the second diode D2 is connected to the input end of the driving module 11.

The diode has the one-way conduction characteristic, and one-way conduction between the power supply KL30 and the driving module 11 is realized by using the second diode D2, the structure is simple, and the cost is low. Exemplarily, the negative electrode of the second diode D2 can be connected to the first end of the first inductor L1.

It is to be noted that the alternative solutions based on the one-way conduction module 15 including the second diode D2 are all within the protection range of the present application.

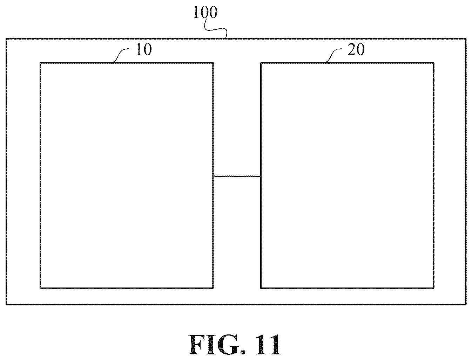

Based on the same inventive concept, the present application further provides an electrical apparatus. As shown in FIG. 11, the electrical apparatus 100 includes the active fuse 20 and the drive circuit 10, and the drive circuit includes the drive circuit 10 in any one of the above embodiments. It is to be understood that the electrical apparatus has the beneficial effects of the drive circuit provided by the embodiments of the present application, which specifically refers to the specific description for the drive circuit in each above embodiment, and will not be listed in this embodiment.

It is to be noted that in the embodiments shown in the above figures, the resistors are represented as a single resistor, and the capacitors are represented as a single capacitor. In other embodiments, the resistors can be series resistors, parallel resistors or series-parallel integrated resistors, and the capacitors can also be series capacitors, parallel capacitors or series-parallel integrated capacitors. The parameters of the components can be set according to the actual requirements, and are not limited in the present application.

It is to be noted that, without conflict, the embodiments in the present application and the features in the embodiments may be combined with each other.

Although the present application is described with reference to the preferred embodiments, without departing from the scope of the present application, various improvements may be made to it and parts therein may be replaced with equivalents, in particular, the various technical features mentioned in each embodiment may be combined in any way, as long as there is no structural conflict. The present application is not limited to the specific embodiments disclosed herein, but includes all technical solutions that fall within the scope of the claims.

## Claims

1. A drive circuit, comprising:
a driving module, wherein the driving module is connected to a driving end of an active fuse and is configured to provide a constant current and a constant voltage, the constant current is configured to blow the active fuse, and the constant voltage is configured to drive the active fuse to be conducted.

2. The drive circuit according to claim 1, wherein the driving module comprises a first driving sub-module and a second driving sub-module, and the drive circuit further comprises a first switching module;
the first driving sub-module is connected to the driving end of the active fuse and is configured to provide the constant voltage; and
the second driving sub-module is connected to the first driving sub-module by the first switching module, is connected to the driving end of the active fuse, and is configured to provide the constant current according to the constant voltage under the condition that the first switching module is conducted.

3. The drive circuit according to claim 1, further comprising:
a current limiting module which is configured to transmit the constant voltage provided by the driving module to the driving end of the active fuse.

4. The drive circuit according to claim 2, further comprising:
a control module which is connected to the first switching module and configured to control on/off of the first switching module.

5. The drive circuit according to claim 4, wherein the control module is further connected to a first driving end and a second driving end of the active fuse, and the control module is further configured to acquire a first voltage of the first driving end and a second voltage of the second driving end under the condition that the first switching module is turned off, and determine the status of the active fuse according to the first voltage and the second voltage.

6. The drive circuit according to claim 5, wherein a current limiting module is connected between the first driving sub-module and the first driving end of the active fuse;
the control module is configured to determine a current flowing through the active fuse according to the voltage value of the constant voltage, the first voltage, and a resistance value of the current limiting module; determine a resistance value of an active fuse loop according to the first voltage, the second voltage, and the current flowing through the active fuse; and determine the status of the active fuse according to the resistance value of the active fuse loop.

7. The drive circuit according to claim 2, wherein
the first switching module comprises a first switch; a first end of the first switch is connected to an output end of the first driving sub-module; a second end of the first switch is connected to an input end of the second driving sub-module; and a control end of the first switch is connected to the control module.

8. The drive circuit according to claim 2, wherein
the first driving sub-module comprises a first inductor, a first diode, a first capacitor and a fourth switch;
a first end of the first inductor is connected to a power supply, and a second end of the first inductor is connected to the first end of the first switch and a positive electrode of the first diode;
a second end of the fourth switch is grounded, and a first control signal is applied to a control end of the fourth switch;
a negative electrode of the first diode is connected to a first electrode of the first capacitor; and
the first electrode of the first capacitor is connected to the driving end of the active fuse, and a second electrode of the first capacitor is grounded.

9. The drive circuit according to claim 2, wherein
the second driving sub-module comprises a driving control sub-module, a fifth switch, a second inductor, a second capacitor and a sampling resistor;
an input end of the driving control sub-module is connected to an output end of the first driving sub-module by the first switching module;
a first end of the second inductor is connected to a first control end of the driving control sub-module and a first end of the fifth switch, and a second end of the second inductor is connected to a first electrode of the second capacitor and a first end of the sampling resistor;
a second end of the fifth switch is grounded, and a second control signal is applied to a control end of the fifth switch;
a second electrode of the second capacitor is grounded; and
a first end of the sampling resistor is connected to a first feedback signal end of the driving control sub-module, and a second end of the sampling resistor is connected to a second feedback signal end of the driving control sub-module and the driving end of the active fuse.

10. The drive circuit according to claim 1, further comprising:
a one-way conduction module which is connected between the driving module and a power supply.

11. An electrical apparatus, comprising:
an active fuse; and
the drive circuit according to any one of claims 1 to 10.
